# EUROPÄISCHE PATENTSCHRIFT

(11) **EP 3 776 821 B1**
(45) Veröffentlichungstag und Bekanntmachung des Hinweises auf die Patenterteilung: **04.09.2024**
(21) Anmeldenummer: 19715837.1
(22) Anmeldetag: 21.03.2019
(51) Int. Cl.: H02K 11/40, H01R 39/12, H01R 39/64, H01R 39/08, H01R 39/10

(54) **ABLEITVORRICHTUNG ZUR ABLEITUNG ELEKTRISCHER STRÖME**
DISCHARGE DEVICE FOR DISCHARGING ELECTRIC CURRENTS
DISPOSITIF DE DÉRIVATION SERVANT À LA DÉRIVATION DE COURANTS ÉLECTRIQUES

(30) Priorität: 28.03.2018 DE 102018107408
(43) Veröffentlichungstag der Anmeldung: 17.02.2021
(73) Patentinhaber: Schunk Carbon Technology GmbH, 4822 Bad Goisern (AT)
(72) Erfinder: WEBER, Markus, 4822 Bad Goisern (AT); KAIN, Ludwig, 4822 Bad Goisern (AT); HEMETSBERGER, Marcus, 4820 Bad Ischl (AT)
(74) Vertreter: advotec.
(86) Internationale Anmeldenummer: PCT/EP2019/057124
(87) Internationale Veröffentlichungsnummer: WO 2019/185447

(56) Entgegenhaltungen:
- WO-A2-2015/044034
- DE-A1- 102013 223 673
- US-A1- 2016 372 987
- US-A1- 2017 353 087

## Beschreibung

Die Erfindung betrifft eine Ableitvorrichtung zur Ableitung elektrischer Ströme von einem insbesondere mit einer Welle ausgebildeten Rotorteil einer Maschine in einen Statorteil der Maschine, umfassend ein Kontaktelement und Federeinrichtung, wobei die Federeinrichtung mit dem Statorteil elektrisch leitend verbindbar ist, wobei mittels der Federeinrichtung das Kontaktelement zur Ausbildung eines elektrisch leitenden Schleifkontaktes zwischen einer zur Ausbildung des Schleifkontaktes vorgesehenen Schleifkontaktfläche des Kontaktelements und einer axialen Wellenkontaktfläche der Welle mit einer Kontaktkraft beaufschlagbar ist, wobei das Kontaktelement ringförmig ausgebildet ist, wobei die Schleifkontaktfläche zumindest kreisringförmig ausgebildet und relativ zu der Wellenkontaktfläche koaxial anordbar ist, wobei die Federeinrichtung einen ringförmigen Stützabschnitt aufweist, von dem die Welle der Maschine zumindest teilweise koaxial umfassbar ist, wobei die Federeinrichtung einen Halteabschnitt aufweist, der eine Halteeinrichtung zur Halterung des Kontaktelements ausbildet, wobei die Federeinrichtung einen Federabschnitt aufweist, der von dem Halteabschnitt zu dem Stützabschnitt verläuft, und eine Bewegung des Kontaktelements relativ zum Stützabschnitt ermöglicht.

Ableitvorrichtungen der eingangs genannten Art sind in unterschiedlichen Ausführungsformen aus dem Stand der Technik bekannt. Insbesondere ist es bekannt, zur Ableitung niederfrequenter Gleichströme Kohlebürsten einzusetzen, die auf einem Schleifring in radialer Verteilung um eine Welle angeordnet und über Anschlusslitzen mit einem Stator kontaktiert sind. Die dabei in einer Halteeinrichtung beziehungsweise einem Bürstenhalter aufgenommenen Kohlebürsten ermöglichen aufgrund ihres geringen elektrischen Widerstands eine direkte Ableitung elektrischer Ströme und können somit eine unerwünschte Stromführung über Lagerstellen der Welle vermeiden, die aufgrund punktueller Verschweißung oder Funkenerosion zu Oberflächenschäden der Lagerkörper oder Lagerringe führen könnte.

Der Begriff "Welle" wird hier als ein Synonym für den Begriff "Rotorteil" oder "Achse" verwendet. Daher sind unter dem Begriff "Welle" alle drehenden Maschinenteile zu verstehen, über die eine Ableitung von Strömen in ein feststehendes Statorteil beziehungsweise Maschinenteil einer Maschine erfolgen kann.

Ableitvorrichtungen werden auch regelmäßig in der Bahntechnik eingesetzt, wo Wechselströme oder auch ein Arbeitsstrom über Radachsen abfließen kann. So ist aus der DE 10 2010 039 847 A1 eine Ableitvorrichtung bekannt, bei der an einem axialen Ende einer Welle beziehungsweise Radachse eines Radsatzes eine elektrisch leitende Endkappe montiert ist, die mit einer Mehrzahl von in axialer Richtung relativ zur Welle angeordneten von den Bürstenhaltern gehalterten Kohlebürsten kontaktierbar ist. Die Kohlebürsten sind jeweils über eine Litze direkt an ein Erdungskabel angeschlossen und über eine Feder wird eine Kontaktkraft jeweils auf Schleifkontaktflächen der Kohlebürsten bewirkt.

Auch bei elektrischen Maschinen im Allgemeinen, beispielsweise für Kraftfahrzeuge, sind vergleichbare Maßnahmen zur Ableitung von Strömen erforderlich. Bei Motorantriebswellen oder daran angeschlossenen Getriebewellen beziehungsweise anderen funktionalen Komponenten können kontinuierlich schwankende Wechselspannungen beziehungsweise Ströme und hochfrequente Strompulse auftreten, die auch Lagerstellen einer Rotorwelle oder Getriebewelle schädigen können, weshalb hier regelmäßig Ableitvorrichtungen erforderlich sind. Nachteilig bei den bekannten Ableitvorrichtungen ist jedoch, dass diese bauartbedingt vergleichsweise viel Bauraum erfordern. Zwar sind auch Lösungen bekannt, bei denen anstelle von Kohlebürsten Faser- oder Drahtgeflechte verwendet werden, wobei jedoch Faser- oder Drahtgeflechte aufgrund einer sehr kleinen Kontaktoberfläche eines Schleifkontaktes einen großen Übergangswiderstand aufweisen und nur geringe Ströme abgeleitet werden können. Zur Ausbildung einer großen Kontaktoberfläche zur Welle ist hingegen eine Mehrzahl von Kohlebürsten erforderlich, die aufgrund ihrer Anordnung jeweils Bürstenhalter mit einem vergleichsweise großen Bauraum und einen entsprechenden Montageaufwand erfordern.

Aus der WO 2015/044034 A2 ist eine Kontakteinheit bekannt, die aus einem Kontaktstück und einer Feder gebildet ist, wobei die Feder eine Rotorwelle eines Rotors einer elektrischen Maschine kreisringförmig umgibt und so einen Stützabschnitt ausbildet, der an einem Gehäuse der elektrischen Maschine anliegt. Von dem Stützabschnitt ausgehend erstreckt sich eine Federabschnitt, an dessen Ende eine Kontaktstück stoffschlüssig befestigt ist. Das Kontaktstück liegt an einer Stirnfläche beziehungsweise einem sich drehenden Lagerring des Rotors an, so dass ein induzierter elektrischer Strom von dem Rotor über das Kontaktstück und die Feder zu dem Gehäuse abgeleitet werden kann.

Die DE 10 2013 223 673 A1offenbart in verschiedenen Ausführungsformen eine Ableitvorrichtung zur Ableitung elektrischer Ströme von einer Welle in einen Statorteil einer Maschine, welche ein Kontaktelement sowie eine Federeinrichtung aufweist. Dabei ist das Kontaktelement mittels der Federeinrichtung zur Ausbildung eines elektrisch leitenden Schleifkontaktes zwischen einer zur Ausbildung des Schleifkontaktes vorgesehen Schleifkontaktfläche des Kontaktelements und einer axialen Wellenkontaktfläche der Welle mit einer Kontaktkraft beaufschlagbar. Gemäß einer abweichenden Ausführungsform ist das Kontaktelement kreisringförmig ausgebildet. Das Kontaktelement ist aus einem harten und widerstandsfähigen Material mit kleinem Reibwertkoeffizienten, wie beispielsweise Stahl oder Kunststoff, ausgebildet.

Aus der US 2016/372987 A1 geht eine weitere Ableitvorrichtung hervor, welche von einem ringförmigen Rahmen gehalterte Kontaktelemente umfasst, welche eine Welle einer elektrischen Maschine radialseitig kontaktieren können.

Der vorliegenden Erfindung liegt daher die Aufgabe zugrunde, eine Ableitvorrichtung vorzuschlagen, die einen niedrigen Übergangswiderstand aufweist, einfach mit einem kleinen Bauraum zu montieren ist, ein mechanisch stabilisiertes Kontaktelement aufweist und eine Erzeugung einer gleichförmig verteilten Kontaktkraft ermöglicht.

Diese Aufgabe wird durch eine Ableitvorrichtung mit den Merkmalen des Anspruchs 1 und eine Maschine mit den Merkmalen des Anspruchs 16 gelöst.

Die erfindungsgemäße Ableitvorrichtung zur Ableitung elektrischer Ströme von einem insbesondere mit einer Welle ausgebildeten Rotorteil einer Maschine in einen Statorteil der Maschine, umfasst ein Kontaktelement und eine Federeinrichtung, wobei die Federeinrichtung mit dem Statorteil elektrisch leitend verbindbar ist, wobei das Kontaktelement überwiegend aus Kohlenstoff ausgebildet ist, wobei mittels der Federeinrichtung das Kontaktelement zur Ausbildung eines elektrisch leitenden Schleifkontakts zwischen einer zur Ausbildung des Schleifkontakts vorgesehenen Schleifkontaktfläche des Kontaktelements und einer axialen Wellenkontaktfläche der Welle mit einer Kontaktkraft beaufschlagbar ist, wobei das Kontaktelement ringförmig ausgebildet ist, wobei die Schleifkontaktfläche zumindest kreisringförmig ausgebildet und relativ zu der Wellenkontaktfläche koaxial anordbar ist, wobei die Federeinrichtung einen ringförmigen Stützabschnitt aufweist, von dem die Welle der Maschine zumindest teilweise koaxial umfassbar ist, wobei der Stützabschnitt zur radialen Anlage an einer Anlagenfläche des Statorteils ausgebildet ist, wobei die Federeinrichtung einen Halteabschnitt aufweist, der eine Halteeinrichtung zur Halterung des Kontaktelements ausbildet, wobei die Federeinrichtung einen Federabschnitt aufweist, der von dem Halteabschnitt zu dem Stützabschnitt verläuft, und eine Bewegung des Kontaktelements relativ zum Stützabschnitt ermöglicht, wobei die Halteeinrichtung ein ringförmiges Kontaktblech umfasst, welches mit dem Kontaktelement formschlüssig und/oder stoffschlüssig verbunden ist, wobei das Kontaktblech formschlüssig und/oder stoffschlüssig mit einem ringförmigen Halteblech der Halteeinrichtung verbunden ist.

Die Ableitvorrichtung ist demnach zur Montage an einer sich drehenden Welle oder Achse einer Maschine ausgebildet. Dabei ist vorgesehen, die Ableitvorrichtung an einem Abschnitt der Welle radial so anzuordnen, dass die Welle von der Ableitvorrichtung radial umgeben ist. Die axial ausgebildete Wellenkontaktfläche ist dann in dem betreffenden Abschnitt der Welle angeordnet. Mittels der Federeinrichtung ist dann das Kontaktelement mit der axial in Richtung einer Rotationsachse der Welle wirkenden Kontaktkraft beaufschlagbar, so dass das Kontaktelement mit seiner Schleifkontaktfläche an die Wellenkontaktfläche angedrückt wird. Da das Kontaktelement ringförmig ausgebildet ist, kann gegenüber einem herkömmlichen Schleifstück eine wesentlich größere Schleifkontaktfläche ausgebildet werden, wodurch eine besonders sichere, und gut leitende elektrische Verbindung zwischen der Welle und dem Statorteil der Maschine geschaffen werden kann. Auch kann das Kontaktelement dann hinsichtlich seiner axialen Erstreckung vergleichsweise kurz bzw. dünn sein. Das Kontaktelement weist demnach eine kreisringförmige Schleifkontaktfläche auf, die dann relativ zu der Wellenkontaktfläche koaxial angeordnet werden kann. Da sich ein abrasiver Abrieb des Schleifkontaktes im Verhältnis zu der großen Schleifkontaktfläche vermindert, kann das Kontaktelement auch scheibenförmig bzw. dünn ausgebildet werden, ohne dass es wesentlich früher verschleißt als ein aus dem Stand der Technik bekanntes Kontaktelement mit kleiner Schleifkontaktfläche und großer Länge. Gegenüber einem herkömmlichen Schleifstück kann so Bauraum eingespart werden, da das Kontaktelement dann hinsichtlich seiner axialen Erstreckung vergleichsweise kurz bzw. dünn ist. Auch ist es nicht mehr erforderlich eine Mehrzahl von Kontaktelementen zur Erzielung eines geringen Übergangswiderstandes an der Welle zu montieren, da bereits ein einziges kreisringförmiges Kontaktelement eine ausreichend große Schleifkontaktfläche ausbilden kann. Weiter ergibt sich aus der axialen Anordnung des Kontaktelements bzw. der Federeinrichtung relativ zu dem Rotor eine im Vergleich zu einer radialen Anordnung besonders einfache Montage der Ableitvorrichtung. So ist die Ableitvorrichtung hier im Wesentlichen alleine aus dem Kontaktelement und der Federeinrichtung gebildet und kann bei einer Montage einfach zwischen einem Gehäuse der Maschine und der Welle eingelegt bzw. geklemmt werden.

Vorteilhaft ist es auch, dass der Stützabschnitt ringförmig ausgebildet und zur radialen Anlage an einer Anlagefläche des Statorteils bzw. eines Gehäuses ausgebildet ist. Die Federeinrichtung kann dann in ihren Außenabmessungen rund ausgebildet sein, so dass sie sich besonders einfach in einem Gehäuse der Maschine montieren lässt. Eine derartige Federeinrichtung kann einfach durch Anlage eines Außendurchmessers des Stützabschnittes an einen Durchmesser des Gehäuses oder auch eines Gehäusedeckels positioniert bzw. zentriert werden, ohne dass eine besondere Befestigung der Federeinrichtung an dem Gehäuse erforderlich wäre. Gleichwohl kann die Federeinrichtung auch mit dem Stützabschnitt form- oder kraftschlüssig mit dem Gehäuse elektrisch leitend verbunden werden.

Die Wellenkontaktfläche kann von einem Wellenabsatz der Welle oder einem an der Welle angeordneten Ring der Ableitvorrichtung ausgebildet sein. Eine Stirnfläche des Wellenabsatzes kann dann die axiale Wellenkontaktfläche der Welle ausbilden. Alternativ kann ein Ring in Art eines Schleifrings vorgesehen sein, der auf der Welle befestigt ist, wobei dann eine axiale Seitenfläche des Rings die Wellenkontaktfläche der Welle ausbilden kann. Der Ring kann hier Bestandteil der Ableitvorrichtung sein. Auch ist es denkbar, dass die Wellenkontaktfläche von einem Lagerring eines Lagers, beispielsweise eines Wälzlagers ausgebildet ist.

Das Kontaktelement kann überwiegend aus Graphit bestehen und einstückig ausgebildet sein. Beispielsweise kann das Kontaktelement ein Kohlenstoffformkörper sein, der durch Pressen und Brennen bzw. Sintern ausgebildet ist. Das Kontaktelement kann aus Graphit, Ruß, Kohlenstofffasern oder einer Mischung dieser Materialien bestehen sowie Partikel der Metalle Eisen, Nickel, Kuper, Zink, Silber, Aluminium und/oder Chrom und einen Binder bzw. eine Binderphase enthalten. Ein Außendurchmesser bzw. ein maximales Außenmaß des ringförmigen Kontaktelements kann ein Vielfaches einer Dicke des Kontaktelements betragen. Das Kontaktelement kann mit einem Verhältnis von Außenmaß zur Dicke von 2:1, 3:1, 4:1, 5:1 oder 10:1 ausgebildet sein.

Erfindungsgemäß weist die Federeinrichtung einen Halteabschnitt auf, der eine Halteeinrichtung zur Halterung des Kontaktelements ausbildet, wobei die Federeinrichtung einen Federabschnitt aufweist, der von dem Halteabschnitt zu dem Stützabschnitt verläuft, und eine Bewegung des Kontaktelements relativ zum Stützabschnitt ermöglicht. Die Halteeinrichtung kann an dem Federabschnitt angeformt sein. Weiter kann der Halteabschnitt an einer Innenseite des Federabschnitts an diesen angeformt sein. Das Kontaktelement kann in einer nahezu beliebigen Art an der Halteeinrichtung befestigt sein. Der Federabschnitt kann zumindest teilweise ringförmig, vorzugsweise vollständig ringförmig und an den Stützabschnitt angeformt sowie innerhalb des Stützabschnitts ausgebildet sein. Wenn der Federabschnitt innerhalb des Stützabschnitts ausgebildet ist, kann das Kontaktelement dicht an einer Welle positioniert werden, wodurch ein Verschleiß des Kontaktelements relativ zu einem fern von der Welle kontaktierten Kontaktelement vergleichsweise geringer ist.

Der Federabschnitt kann aus einer Stützebene des Stützabschnitts hervorragen und die Halteeinrichtung von dem Stützabschnitt beabstanden. Die Stützebene kann dabei orthogonal zu einer Rotationsachse der Welle verlaufen. Ein Abstand der Stützebene relativ zum Halteabschnitt bzw. der Halteeinrichtung entspricht dann im Wesentlichen einem möglichen Federweg des Federabschnitts der Federeinrichtung. Prinzipiell ist es aber auch möglich, dass der Federabschnitt im Wesentlichen in der Stützebene liegt und erst durch Aufbringen einer Federkraft aus der Stützebene herausbewegt wird. In allen Fällen ist es jedoch erforderlich, dass das an der Federeinrichtung befestigte Kontaktstück die Stützebene des Stützabschnitts so weit überragt, dass zumindest über den Federabschnitt eine Kontaktkraft auf das Kontaktelement und damit die Welle bzw. die Wellenkontaktfläche bewirkt werden kann.

Der Federabschnitt kann aus zumindest einem Federarm, bevorzugt aus zwei Federarmen, besonders bevorzugt aus drei oder mehr Federarmen ausgebildet sein. Bereits mit einem Federarm ist es möglich eine Kontaktkraft auf die Wellenkontaktfläche zu erzeugen. Mit zwei oder besser drei Federarmen kann eine besonders gleichmäßige Verteilung einer Kontaktkraft auf die Wellenkontaktfläche, und damit ein weitestehend gleichmäßiger Abrieb an dem Kontaktelement erzielt werden.

Der Federarm kann schraubenförmig oder spiralförmig von dem Halteabschnitt zu dem Stützabschnitt verlaufen. Der Federarm kann dann in Art einer Spiralfeder oder einer Schraubenfeder ausgebildet sein. Relativ bezogen auf eine radiale Erstreckung der Federeinrichtung kann der Federarm dann zwischenliegend dem Halteabschnitt und dem Stützabschnitt angeordnet sein. Prinzipiell kann aber auch vorgesehen sein den Federarm relativ bezogen auf eine axiale Erstreckung der Federeinrichtung zwischenliegend dem Halteabschnitt und dem Stützabschnitt anzuordnen.

Eine Länge des Federarms kann 1/2, 1/3, 1/4 oder 1/Federarmzahl Windung betragen. Damit muss der Federarm noch nicht einmal eine gesamte Windung lang sein. Besonders vorteilhaft ist es, wenn die Länge bzw. Windung einer reziproken Anzahl der Federarme der Federeinrichtung entspricht.

Das Kontaktelement kann auch formschlüssig und/oder stoffschlüssig an der Halteinrichtung befestigt sein. Da das Kontaktelement besonders filigran ausgebildet sein kann, ist mit einer derartigen Art der Befestigung sichergestellt, dass das Kontaktelement bei einer Montage der Ableitvorrichtung nicht ohne weiteres zerstört wird.

Erfindungsgemäß umfasst die Halteeinrichtung ein ringförmiges Kontaktblech, welches mit dem Kontaktelement formschlüssig und/oder stoffschlüssig verbunden ist, wobei das Kontaktblech formschlüssig und/oder stoffschlüssig mit einem ringförmigen Halteblech der Halteeinrichtung verbunden ist

Das Kontaktelement kann an dem ringförmigen Kontaktblech mittels Nieten, Schweißen, Löten, Bördeln oder Kleben befestigt sein, wobei das Kontaktblech mittels Nieten, Schweißen, Löten, Bördeln oder Kleben an dem Halteblech befestigt sein kann.. Durch die Verwendung des Kontaktblechs wird es möglich das Kontaktelement mechanisch zu stabilisieren derart, dass keine Durchbiegung des Kontaktelements mit einem eventuellen Bruch desselben erfolgen kann. Das Kontaktelement kann dann auch besonders dünn ausgebildet werden. Weiter ist es dann auch möglich für den Halteabschnitt und/oder den Federabschnitt ein vergleichsweise dünnes Material, wie beispielsweise ein Blech zu verwenden. Durch das ringförmige Kontaktblech wird demnach eine gleichförmige Verteilung einer über den Federabschnitt erzeugten Kontaktkraft erreicht.

Der Stützabschnitt kann aus einer radialen Ringscheibe und einem daran anschließenden axialen Ringkranz zur Anlage an der Anlagefläche ausgebildet sein. Die Ringscheibe erstreckt sich dann relativ zur Welle in einer radialen Richtung und ist durch Bördeln, Stanzen oder Tiefziehen eines äußeren Randes derart umgeformt, dass der relativ zur Welle axiale Ringkranz ausgebildet ist. Ein Durchmesser des Ringkranzes entspricht dann im Wesentlichen einem Innendurchmesser der zylinderförmigen Anlagefläche des Statorteils bzw. Gehäuses der Maschine, in dem die Welle gelagert ist. Zwischen dem axialen Ringkranz und der Anlagenfläche kann beispielsweise eine Presspassung ausgebildet sein, so dass mittels des Stützabschnitts die Ableitvorrichtung mit einfachen Mitteln an einer Maschine montiert werden kann.

So ist es besonders vorteilhaft, wenn der Ringkranz konisch ausgebildet ist. Insbesondere kann ein Konus des Ringkranzes zu einem freien Ende des Ringkranz hin mit einem Außendurchmesser sich aufweitend ausgebildet sein. Die Ableitvorrichtung kann dann besonders gut in einer zylinderförmigen Ausnehmung eingesetzt bzw. zentriert werden. Beim Einsetzen der Ableitvorrichtung kann der konische Ringkranz dabei zumindest teilweise umgeformt werden.

In dem Ringkranz können Schlitze ausgebildet sein, die Federkrallen zur Anlage an der Anlagefläche ausbilden. Durch die Ausbildung von Schlitzen wird es möglich, den Ringkranz ohne großen Kraftaufwand umzuformen. Insbesondere kann vorgesehen sein, dass eine Vielzahl von axialen Schlitzen über einem Umfang des Ringkranzes gleichmäßig verteilt ausgebildet ist. Wenn dann der Ringkranz konisch ausgebildet ist, kann der Ringkranz in Art einer Feder leicht elastisch verformt werden. Die Schlitze bilden demnach Federkrallen aus, die dann eine in die radiale Richtung wirkende Federkraft auf die Anlagefläche bewirken.

Ein Einsetzen der Ableitvorrichtung in eine zylindrische Ausnehmung und auch deren Entfernung wird so wesentlich erleichtert.

Die Federeinrichtung kann aus einem elektrisch leitenden Metall, vorzugsweise Federbronze, Messing oder Stahl bestehen. Die Federeinrichtung kann dann als ein Leiter für über das Kontaktelement abzuleitende elektrische Ströme dienen. Insbesondere wenn der ringförmige Stützabschnitt der Federeinrichtung unmittelbar mit der Anlagenfläche des Statorteils in Kontakt steht, ist es nicht mehr erforderlich einen zusätzlichen Leiter, beispielsweise in Form einer Litze oder Ähnlichem, vorzusehen.

Weiter kann die Federeinrichtung einstückig, vorzugsweise aus einem Blech mittels Stanzen oder Biegen ausgebildet sein. Die Federeinrichtung kann folglich in Art einer Blattfeder ausgebildet sein, die aus dem Blech in einem Arbeitsschritt gestanzt werden kann.

Die Federeinrichtung kann auch eine Beschichtung aus Kupfer, Nickel, Zinn, Zink, Gold oder Silber aufweisen. Eine derartige Beschichtung kann eine elektrische Leitfähigkeit oder einen Korrosionsschutz der Federeinrichtung weiter verbessern. Die erfindungsgemäße Maschine weist einen von einer Welle ausgebildeten Rotorteil und einen Statorteil auf sowie eine erfindungsgemäße Ableitvorrichtung.

Die Anlagefläche kann eine Innenfläche eines Gehäuses der Maschine sein. Insbesondere kann die Anlagefläche die Welle der Maschine koaxial umgeben.

An der Innenfläche kann ein Wälzlager der Welle anliegen. Die Ableitvorrichtung kann dann so ausgebildet sein, dass sie einen Außendurchmesser aufweist, der im Wesentlichen einem Außendurchmesser des Wälzlagers entspricht. Dies ermöglicht eine besonders einfache Montage der Ableitvorrichtung benachbart dem Wälzlager. Eine Ableitung elektrischer Ströme über das Wälzlager kann so sicher vermieden werden. Auch kann Bauraum für die Ableitvorrichtung in dem Gehäuse der Maschine eingespart werden. Darüber hinaus wird es möglich bei einem Wechsel des Wälzlagers die Ableitvorrichtung ebenfalls zeitgleich mit auszuwechseln.

Weitere vorteilhafte Ausführungsformen einer Maschine ergeben sich aus den Merkmalsbeschreibungen der auf den Vorrichtungsanspruch 1 rückbezogenen Unteransprüche.

Im Folgenden wird die Erfindung unter Bezugnahme auf die beigefügten Zeichnungen näher erläutert.

Es zeigen:
- **Fig. 1**: eine perspektivische Ansicht einer Ableitvorrichtung;
- **Fig. 2**: eine Schnittansicht einer Ableitvorrichtung in einem Gehäuse einer Maschine.

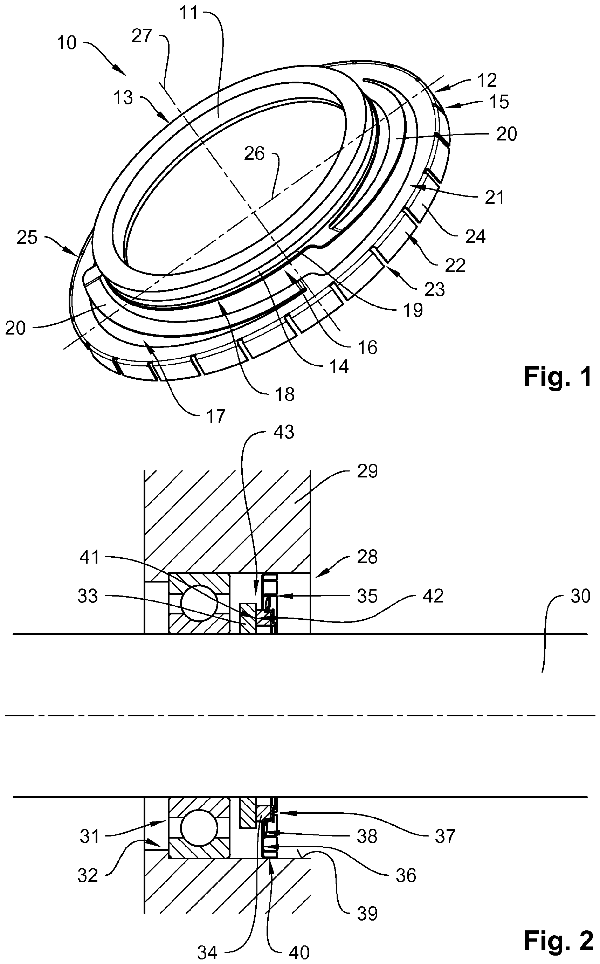

Die **Fig. 1** zeigt eine perspektivische Ansicht einer Ableitvorrichtung 10 zur Ableitung elektrischer Ströme von einem Insbesondere mit einer hier nicht dargestellten Welle ausgebildeten Rotorteil einer Maschine in einen Statorteil der Maschine. Die Ableitvorrichtung 10 umfasst ein Kontaktelement 11, welches aus Kohlenstoff, insbesondere Graphit ausgebildet ist sowie eine Federeinrichtung 12, welche aus Blech durch Stanzen und Biegen hergestellt ist. Das Kontaktelement 11 bildet eine Schleifkontaktfläche 13 aus, über die ein Lagerring oder Schleifring der Welle elektrisch kontaktiert werden kann. Weiter ist das hier ringförmige Kontaktelement 11 vergleichsweise dünn ausgebildet und daher auf einem ebenfalls ringförmigen Kontaktblech 14 stoffschlüssig und elektrisch leitend befestigt. Die Federeinrichtung 12 bildet einen Stützabschnitt 15, einen Halteabschnitt 16 und einen Federabschnitt 17 aus.

Der Halteabschnitt 16 bildet eine Halteeinrichtung 18 mit einem ringförmigen Halteblech 19 und den darauf angeordneten Kontaktblech 14 aus. Der Federabschnitt 17 weist drei Federarme 20 auf. Der Stützabschnitt 15 ist aus einer radialen Ringscheibe 21 und einem daran anschließenden axialen Ringkranz 22 ausgebildet, wobei in dem Ringkranz 22 radiale Schlitze 23 ausgebildet sind, die Federkrallen 24 ausbilden. Der Ringkranz 22 dient zur radialen Anlage an einer hier nicht dargestellten Anlagefläche des Statorteils. Weiter sind das Halteblech 19, die Federarme 20, die Ringscheibe 21 zusammen mit dem Ringkranz 22 einstückig aus einem Blech 25 aus Federbronze bzw. Messing oder Stahl ausgestanzt. Der Federabschnitt 17 verbindet dabei das Halteblech 19 mit dem Stützabschnitt 15. Der Federabschnitt 17 ragt insbesondere aus einer Stützebene 26 des Stützabschnitts 15 hervor, und beabstandet so die Halteeinrichtung 18 von dem Stützabschnitt 15 in einer radialen Richtung, bezogen auf eine Rotationsachse 27 der hier nicht dargestellten Welle.

Die **Fig. 2** zeigt eine Ableitvorrichtung 28 in einer Einbausituation in einem hier nur abschnittsweise dargestellten Gehäuse 29 zusammen mit einer Welle 30 einer hier nicht gezeigten Maschine. Die Welle 30 ist insbesondere mittels eines Rillenkugellagers 31 in einer zylinderförmigen Bohrung 32 des Gehäuses 29 gelagert. Auf der Welle 30 ist weiter ein Schleifring 33 der Ableitvorrichtung 28 drehfest angeordnet. Die Ableitvorrichtung 28 umfasst weiter ein Kontaktelement 34 aus Graphit sowie eine Federeinrichtung 35. Die Federeinrichtung 35 bildet einen Stützabschnitt 36, einen Halteabschnitt 37 und einen Federabschnitt 38 aus. Der Stützabschnitt 36 ist an einer Anlagefläche 39 der Bohrung 32 über einen axialen Ringkranz 40 des Stützabschnitts 36 befestigt. Ein Durchmesser des Ringkranzes 40 ist so bemessen, dass der Stützabschnitt 36 in der Bohrung 32 kraftschlüssig verklemmt ist. Über dem Federabschnitt 38 kann eine Federkraft auf das Kontaktelement 34, welches mit einer Schleifkontaktfläche 41 an einer Wellenkontaktfläche 42 des Schleifrings 33 anliegt, bewirkt werden. Über den so ausgebildeten Schleifkontakt 43 können elektrische Ströme von der Welle 30 einfach auf das Gehäuse 29 abgeleitet und das Rillenkugellager 31 vor Beschädigungen geschützt werden.

## Patentansprüche

1. Ableitvorrichtung (10, 28) zur Ableitung elektrischer Ströme von einem insbesondere mit einer Welle (30) ausgebildeten Rotorteil einer Maschine in einen Statorteil der Maschine, umfassend ein Kontaktelement (11, 34) und eine Federeinrichtung (12, 35), wobei die Federeinrichtung mit dem Statorteil elektrisch leitend verbindbar ist, wobei mittels der Federeinrichtung (12, 35) das Kontaktelement (11, 34) zur Ausbildung eines elektrisch leitenden Schleifkontaktes (43) zwischen einer zur Ausbildung des Schleifkontaktes vorgesehenen Schleifkontaktfläche (13, 41) des Kontaktelements (11, 34) und einer axialen Wellenkontaktfläche (42) der Welle mit einer Kontaktkraft beaufschlagbar ist, wobei
das Kontaktelement (11, 34) ringförmig ausgebildet ist, wobei die Schleifkontaktfläche (13, 41) zumindest kreisringförmig ausgebildet und relativ zu der Wellenkontaktfläche (42) koaxial anordbar ist, wobei die Federeinrichtung (12, 35) einen ringförmigen Stützabschnitt (15, 36) aufweist, von dem die Welle (30) der Maschine zumindest teilweise koaxial umfassbar ist,
wobei die Federeinrichtung einen Halteabschnitt (16, 37) aufweist, der eine Halteeinrichtung (18) zur Halterung des Kontaktelements (11, 34) ausbildet, wobei die Federeinrichtung (12, 35) einen Federabschnitt (17, 38) aufweist, der von dem Halteabschnitt (16, 37) zu dem Stützabschnitt (15, 36) verläuft,
und eine Bewegung des Kontaktelements (11, 34) relativ zum Stützabschnitt ermöglicht,
**dadurch gekennzeichnet,**
**dass** das Kontaktelement (11, 34) überwiegend aus Kohlenstoff ausgebildet ist, wobei der Stützabschnitt (15, 36) zur radialen Anlage an einer Anlagefläche (39) des Statorteils ausgebildet ist, wobei die Halteeinrichtung (18) ein ringförmiges Kontaktblech (14) umfasst, welches mit dem Kontaktelement (11, 34) formschlüssig und/oder stoffschlüssig verbunden ist, wobei das Kontaktblech (14) formschlüssig und/oder stoffschlüssig mit einem ringförmigen Halteblech (19) der Halteeinrichtung verbunden ist.

2. Ableitvorrichtung nach Anspruch 1,
**dadurch gekennzeichnet,**
**dass** die Wellenkontaktfläche (42) von einem Wellenabsatz der Welle (30) oder einem an der Welle angeordneten Ring (33) der Ableitvorrichtung (10, 28) ausgebildet ist.

3. Ableitvorrichtung nach Anspruch 1 oder 2,
**dadurch gekennzeichnet,**
**dass** das Kontaktelement (11, 34) überwiegend aus Grafit besteht und einstückig ausgebildet ist.

4. Ableitvorrichtung nach einem der vorangehenden Ansprüche, **dadurch gekennzeichnet,**
**dass** der Federabschnitt (17, 38) aus einer Stützebene (26) des Stützabschnitts (15, 36) hervorragt und die Halteeinrichtung (18) von dem Stützabschnitt beabstandet.

5. Ableitvorrichtung nach einem der vorangehenden Ansprüche, **dadurch gekennzeichnet,**
**dass** der Federabschnitt (17, 38) aus zumindest einem Federarm (20), bevorzugt zwei Federarmen, besonders bevorzugt drei oder mehr Federarmen ausgebildet ist.

6. Ableitvorrichtung nach Anspruch 5,
**dadurch gekennzeichnet,**
**dass** der Federarm (20) schraubenförmig oder spiralförmig von dem Halteabschnitt (16, 37) zu dem Stützabschnitt (15, 36) verläuft.

7. Ableitvorrichtung nach Anspruch 5 oder 6,
**dadurch gekennzeichnet,**
**dass** eine Länge des Federarms (20) 1/2, 1/3, 1/4 oder 1/Federarmzahl Windung beträgt.

8. Ableitvorrichtung nach einem der vorangehenden Ansprüche,
**dadurch gekennzeichnet,**
**dass** das Kontaktelement (11, 34) formschlüssig und/oder stoffschlüssig an der Halteeinrichtung (18) befestigt ist.

9. Ableitvorrichtung nach einem der vorangehenden Ansprüche,
**dadurch gekennzeichnet,**
**dass** das Kontaktelement (11, 34) an dem ringförmigen Kontaktblech (14) mittels Nieten, Schweißen, Löten, Bördeln oder Kleben befestigt ist, wobei das Kontaktblech mittels Nieten, Schweißen, Löten, Bördeln oder Kleben an dem ringförmigen Halteblech (19) befestigt ist.

10. Ableitvorrichtung nach einem der vorangehenden Ansprüche,
**dadurch gekennzeichnet,**
**dass** der Stützabschnitt (15, 36) aus einer radialen Ringscheibe (21) und einem daran anschließenden axialen Ringkranz (22) zur Anlage an der Anlagefläche (39) ausgebildet ist.

11. Ableitvorrichtung nach Anspruch 10,
**dadurch gekennzeichnet,**
**dass** der Ringkranz (22) konisch ausgebildet ist.

12. Ableitvorrichtung nach Anspruch 10 oder 11,
**dadurch gekennzeichnet,**
**dass** in dem Ringkranz (22) Schlitze (23) ausgebildet sind, die Federkrallen (24) zur Anlage an der Anlagefläche (39) ausbilden.

13. Ableitvorrichtung nach einem der vorangehenden Ansprüche,
**dadurch gekennzeichnet,**
**dass** die Federeinrichtung (12, 35) aus einem elektrisch leitenden Metall, vorzugsweise Federbronze, Messing oder Stahl besteht.

14. Ableitvorrichtung nach einem der vorangehenden Ansprüche,
**dadurch gekennzeichnet,**
**dass** die Federeinrichtung (12, 35) einstückig, vorzugsweise aus einem Blech (25) mittels Stanzen und Biegen ausgebildet ist.

15. Ableitvorrichtung nach einem der vorangehenden Ansprüche,
**dadurch gekennzeichnet,**
**dass** die Federeinrichtung (12, 35) eine Beschichtung aus Kupfer, Nickel, Zinn, Zink, Gold oder Silber aufweist.

16. Maschine mit einer einen Rotorteil ausbildenden Welle (30) und einen Statorteil, sowie einer Ableitvorrichtung (10, 28) nach einem der vorangehenden Ansprüche.

17. Maschine nach Anspruch 16,
**dadurch gekennzeichnet,**
**dass** die Anlagefläche (39) eine Innenfläche eines Gehäuses (29) der Maschine ist.

18. Maschine nach Anspruch 17,
**dadurch gekennzeichnet,**
**dass** an der Innenfläche ein Wälzlager (31) der Welle (30) anliegt.

## Claims

1. A discharge device (10, 28) for discharging electric currents from a rotor part of a machine to a stator part of the machine, the rotor part in particular having a shaft (30), the discharge device (10, 28) comprising a contact element (11, 34) and a spring means (12, 35), the spring means being connectable to the stator part in an electrically conductive manner, the contact element (11, 34) being pressurized with a contact force by means of the spring means (12, 35) for realizing an electrically conductive sliding contact (43) between a sliding contact surface (13, 41) of the contact element (11, 34) provided for realizing the sliding contact and an axial shaft contact surface (42) of the shaft, the contact element (11, 34) being circular, the sliding contact surface (13, 41) being at least annular in shape and being disposed coaxially in relation to the shaft contact surface (42), the spring means (12, 35) comprising a circular support section (15, 36) which coaxially encircles the shaft (30) of the machine at least partially, the spring means (12, 35) having a holding section (16, 37) which forms a holding means (18) for holding the contact element (11, 34), the spring means (12, 35) comprising a spring section (17, 38) which extends from the holding section (16, 37) to the support section (15, 36) and enables moving the contact element (11, 34) in relation to the support section (15, 36),
**characterized in that**
the contact element (11, 34) is made predominantly of carbon, the support section (15, 36) being configured for radially abutting against an abutment surface (39) of the stator part, the holding means (18) comprising a circular contact sheet (14) to which the contact element (11, 34) is fastened in a form-fit and/or bonded manner, the contact sheet (14) being fastened to a circular holding sheet (19) of the holding means (18) in a form-fit and/or bonded manner.

2. The discharge device according to claim 1,
**characterized in that**
the shaft contact surface (42) is formed by a shaft ledge of the shaft (30) or a ring (33) of the discharge device (10, 28) disposed on the shaft.

3. The discharge device according to claim 1 or 2,
**characterized in that**
the contact element (11, 34) consists predominantly of graphite and is made in one piece.

4. The discharge device according to any of the preceding claims, **characterized in that**
the spring section (17, 38) protrudes from a support plane (26) of the support section (15, 36) and spaces the holding means (18) from the support section.

5. The discharge device according to any of the preceding claims, **characterized in that**
the spring section (17, 38) is made of at least one spring arm (20), preferably two spring arms, particularly preferably three or more spring arms.

6. The discharge device according to claim 5,
**characterized in that**
the spring arm (20) extends from the holding section (16, 37) to the support section (15, 36) in a helical or spiraled shape.

7. The discharge device according to claim 5 or 6,
**characterized in that**
a length of the spring arm (20) is 1/2 of a winding, 1/3 of a winding, 1/4 of a winding or 1/spring-arm number of a winding.

8. The discharge device according to any of the preceding claims, **characterized in that**
the contact element (11, 34) is fastened to the holding means (18) in a form-fit and/or bonded manner.

9. The discharge device according to any of the preceding claims, **characterized in that**
the contact element (11, 34) is fastened to the circular contact sheet (14) by means of riveting, welding, soldering, flanging or adhesion, the contact sheet being fastened to the circular holding sheet (19) by means of riveting, welding, soldering, flanging or adhesion.

10. The discharge device according to any of the preceding claims, **characterized in that**
the support section (15, 36) is realized by a radial circular washer (21) and an axial circular collar (22) adjacent thereto for abutting against the abutment surface (39).

11. The discharge device according to claim 10
**characterized in that**
the circular collar (22) is conical in shape.

12. The discharge device according to claim 10 or 11,
**characterized in that**
slits (23) are formed in the circular collar (22) which form spring claws (24) for being abutted against the abutment surface (39).

13. The discharge device according to any of the preceding claims, **characterized in that**
the spring means (12, 35) consists of an electrically conductive metal, preferably phosphorous bronze, brass or steel.

14. The discharge device according to any of the preceding claims, **characterized in that**
the spring means (12, 35) is made in one piece, preferably from a metal sheet (25), by means of punching and bending.

15. The discharge device according to any of the preceding claims, **characterized in that**
the spring means (12, 35) has a coating made of copper, nickel, tin, zinc, gold or silver.

16. A machine having a shaft (30), which forms a rotor part, and a stator part and a discharge device (10, 28) according to any of the preceding claims.

17. The machine according to claim 16,
**characterized in that**
the abutment surface (39) is an inner surface of a casing (29) of the machine.

18. The machine according to claim 17,
**characterized in that**
a rolling bearing (31) of the shaft (30) abuts against the inner surface.

## Revendications

1. Dispositif de décharge (10, 28) pour décharger des courants électriques d'une partie de rotor d'une machine dans une partie de stator de la machine, la partie de rotor comprenant notamment un arbre (30), le dispositif de décharge (10, 28) comprenant un élément de contact (11, 34) et un moyen de ressort (12, 35), le moyen de ressort étant connectable à la partie de stator de manière électriquement conductrice, le moyen de ressort (12, 35) étant configuré pour soumettre l'élément de contact (11, 34) à une force de contact afin de former un contact glissant (43) électriquement conducteur entre une surface de contact glissant (13, 41) de l'élément de contact (11, 34), qui sert à former le contact glissant, et une surface de contact d'arbre (42) axiale de l'arbre, l'élément de contact (11, 34) étant circulaire, la surface de contact glissant (13, 41) étant au moins annulaire et étant disposée de manière coaxiale par rapport à la surface de contact d'arbre (42), le moyen de ressort (12, 35) ayant une partie de support (15, 36) circulaire configurée pour entourer coaxialement l'arbre (30) de la machine au moins en partie, le moyen de ressort (12, 35) ayant une partie de retenue (16, 37) qui forme un moyen de retenue (18) pour retenir l'élément de contact (11, 34), le moyen de ressort (12, 35) ayant une partie de ressort (17, 38) qui s'étend de la partie de retenue (16, 37) à la partie de support (15, 36) et permet au l'élément de contact (11, 34) de se déplacer par rapport à la partie de support (15, 36),
**caractérisé en ce que**
l'élément de contact (11, 34) est principalement en carbone, la partie de support (15, 36) étant configurée pour venir en contact radial avec une surface de butée (39) de la partie de stator, le moyen de retenue (18) comprenant une tôle de contact (14) circulaire à laquelle l'élément de contact (11, 34) est fixé par liaison par forme et/ou par matière, la tôle de contact (14) étant fixée à une tôle de retenue (19) circulaire du moyen de retenue (18) par liaison par forme et/ou par matière.

2. Dispositif de décharge selon la revendication 1,
**caractérisé en ce que**
la surface de contact d'arbre (42) est formée par un épaulement de l'arbre (30) ou par une bague (33) du dispositif de décharge (10, 28) disposée sur l'arbre.

3. Dispositif de décharge selon la revendication 1 ou 2, **caractérisé en ce que**
l'élément de contact (11, 34) est principalement en graphite et est monobloc.

4. Dispositif de décharge selon l'une quelconque des revendications précédentes,
**caractérisé en ce que**
la partie de ressort (17, 38) fait saillie sur un plan de support (26) de la partie de support (15, 36) et espace le moyen de retenue (18) et la partie de support.

5. Dispositif de décharge selon l'une quelconque des revendications précédentes,
**caractérisé en ce que**
la partie de ressort (17, 38) se compose d'au moins un bras de ressort (20), de préférence deux bras de support, de préférence particulière trois ou plus bras de support.

6. Dispositif de décharge selon la revendication 5,
**caractérisé en ce que**
le bras de ressort (20) s'étend de la partie de retenue (16, 37) à la partie de support (15, 36) en forme hélicoïdale ou en spirale.

7. Dispositif de décharge selon la revendication 5 ou 6, **caractérisé en ce**
**qu'**une longueur du bras de ressort (20) est 1/2, 1/3, 1/4 ou 1/nombre de bras de ressort d'une spire.

8. Dispositif de décharge selon l'une quelconque des revendications précédentes,
**caractérisé en ce que**
l'élément de contact (11, 34) est fixé au moyen de retenue (18) par liaison par forme et/ou par matière.

9. Dispositif de décharge selon l'une quelconque des revendications précédentes,
**caractérisé en ce que**
l'élément de contact (11, 34) est fixé à la tôle de contact (14) circulaire par rivetage, soudage, brasage, sertissage ou adhésion, la tôle de contact étant fixée à la tôle de retenue (19) circulaire par rivetage, soudage, brasage, sertissage ou adhésion.

10. Dispositif de décharge selon l'une quelconque des revendications précédentes,
**caractérisé en ce que**
la partie de support (15, 36) est formée par une rondelle (21) radiale et une couronne circulaire (22) axiale adjacente à celle-ci pour venir en contact avec la surface de butée (39).

11. Dispositif de décharge selon la revendication 10
**caractérisé en ce que**
la couronne circulaire (22) est en forme conique.

12. Dispositif de décharge selon la revendication 10 ou 11, **caractérisé en ce que**
des fentes (23) sont formées dans la couronne circulaire (22), les fentes (23) formant des griffes de ressort (24) pour venir en contact avec la surface de butée (39).

13. Dispositif de décharge selon l'une quelconque des revendications précédentes,
**caractérisé en ce que**
le moyen de ressort (12, 35) est en métal électriquement conducteur, de préférence bronze phosphoreux, laiton ou acier.

14. Dispositif de décharge selon l'une quelconque des revendications précédentes,
**caractérisé en ce que**
le moyen de ressort (12, 35) est monobloc et, de préférence, fait à partir de tôle (25) par découpage et pliage.

15. Dispositif de décharge selon l'une quelconque des revendications précédentes,
**caractérisé en ce que**
le moyen de ressort (12, 35) a un revêtement en cuivre, nickel, étain, zinc, or ou argent.

16. Machine comprenant un arbre (30), qui forme une partie de rotor, et une partie de stator et un dispositif de décharge (10, 28) selon l'une quelconque des revendications précédentes.

17. Machine selon la revendication 16,
**caractérisé en ce que**
la surface de butée (39) est une face intérieure d'un boîtier (29) de la machine.

18. Machine selon la revendication 17,
**caractérisé en ce**
**qu'**un palier à rouleau (31) de l'arbre (30) est en contact avec la face intérieure.
